# EUROPÄISCHE PATENTSCHRIFT

(11) **EP 0 826 906 B1**
(45) Veröffentlichungstag und Bekanntmachung des Hinweises auf die Patenterteilung: **24.10.2001**
(21) Anmeldenummer: 97113825.0
(22) Anmeldetag: 11.08.1997
(51) Int. Cl.: F16H 7/12

(54) **Spanneinrichtung für Zugmittel mit festgelegtem Spannweg**
Belt tensioner with limited tensioning movement
Tendeur de courroie avec mouvement de tension limité

(30) Priorität: 24.08.1996 DE 19634343
(43) Veröffentlichungstag der Anmeldung: 04.03.1998
(73) Patentinhaber: INA Wälzlager Schaeffler oHG, 91072 Herzogenaurach (DE); DaimlerChrysler AG, 70567 Stuttgart (DE); ContiTech Antriebssysteme GmbH, 30165 Hannover (DE)
(72) Erfinder: Huss, Michael, Dipl.-Ing.(FH), 90409 Nürnberg (DE); Bruchner, Klaus, Dr.-Ing., 73061 Ebersbach (DE); Kaufmann, Ralf, Dipl.-Ing., 70569 Stuttgart (DE); Bonkowski, Manfred, 30900 Wedemark (DE)
(74) Vertreter: Matschkur, Lindner, Blaumeier Patent- und Rechtsanwälte

(56) Entgegenhaltungen:
- DE-C- 3 908 817
- DE-C- 4 223 325
- FR-A- 930 157
- US-A- 3 071 980
- US-A- 4 713 045

## Beschreibung

### Gebiet der Erfindung

Die vorliegende Erfindung betrifft eine Spanneinrichtung für Zugmittel, insbesondere Riemen, mit einer gegenüber einem ortsfesten Maschinenteil verstellbaren Schildplatte, und mit einer auf einem Lagerbolzen drehbar gelagerten Spannrolle zur Anlage an den Riemen.

### Hintergrund der Erfindung

Eine derartige Spanneinrichtung ist beispielsweise aus der DE-C 39 08 817 bekannt. Innerhalb des Riementriebs ist eine auf einer Schildplatte befestigte Lichtmaschine angeordnet, wobei die Schildplatte um eine senkrecht auf einer von dem Riemen aufgespannten Ebene stehenden Schwenkachse schwenbar angeordnet ist. Die Schildplatte weist im Abstand von der Schwenkachse ein Langloch auf, durch das eine Befestigungsschraube hindurchgeführt ist, die in ein Gewinde eines ortsfesten Maschinenteils eingreift. An einer anderen Stelle des Riementriebs ist ein federbelasteter Riemenspanner vorgesehen, der mit Kerben versehen ist. Eine Kerbe ist dem Spannarm und eine andere Kerbe ist dem Gehäuse zugeordnet. Zur Einstellung der Riemenspannung wird die Befestigungsschraube der Lichtmaschine gelockert, danach wird die Schildplatte unter Spannung des Riemens geschwenkt. Infolge der zunehmenden Riemenspannung verschwenkt auch der Spannarm. Sobald die Markierungen des Spannarms und des Gehäuses übereinstimmen, wird die Befestigungsschraube angezogen, so daß die Schildplatte am ortsfesten Maschinenteil fixiert ist. Bei dieser Spanneinrichtung wird zum einen die bewegliche Schildplatte mit der daran vorgesehenen Lichtmaschine und zum anderen der federbelastete Spanner benötigt. Das Einstellen der vorgesehenen Riemenspannung kann dadurch erschwert werden, daß die Sicht auf die Markierungen behindert ist.

Zum Stand der Technik wird auf FR 930 157 A verwiesen:

Das Dokument FR-A-930 157 zeigt eine Spanneinrichtung für Zugmittel, mit einer gegenüber einem ortsfesten Maschinenteil verstellbaren, **jedoch nicht verschwenkbaren** Schildplatte, und mit einer auf einem Lagerbolzen drehbar gelagerten Spannrolle zur Anlage an das Zugmittel, wobei der Lagerbolzen mit einem, an der Schildplatte aufgenommenen Exzenter versehen ist, wobei die Längsachsen des Exzenters und des Lagerbolzens um eine Exzentrizität voneinander beabstandet sind, und wobei ein Verschwenken des Lagerbolzens um den Exzenter durch einen Anschlag begrenzt ist.

### Zusammenfassung der Erfindung

Aufgabe der vorliegenden Erfindung ist es, die gattungsgemäße Spanneinrichtung derart weiterzubilden, daß einerseits die optische Kontrolle entfällt und daß andererseits weniger Teile erforderlich sind.

Erfindungsgemäß wird diese Aufgabe gelöst mit einer Spanneinrichtung für Zugmittel, insbesondere Riemen,
- mit einer gegenüber einem ortsfesten Maschinenteil verschwenkbaren Schildplatte,
- und mit einer auf einem Lagerbolzen drehbar gelagerten Spannrolle zur Anlage an das Zugmittel,
- wobei der Lagerbolzen mit einem, an der Schildplatte aufgenommenen Exzenter versehen ist,
- wobei die Längsachsen des Exzenters und des Lagerbolzens um eine Exzentrizität voneinander beabstandet sind,
- wobei der Lagerbolzen von einem unteren Totpunkt bis über den oberen Totpunkt hinaus verschwenkbar ist,
- wobei im unteren Totpunkt die Längsachsen des Exzenters und der Spannrolle wenigstens annähernd die Wirklinie der radialen Spannrollenkraft schneiden, die von dem Riemen auf die Spannrolle übertragen wird, und wobei die Längsachse des Exzenters zwischen der Längsachse der Spannrolle und dem Angriffspunkt der Spannrollenkraft angeordnet ist, und
- wobei die Verschwenkung des Lagerbolzens um den Exzenter durch einen Anschlag begrenzt ist.
Mit der erfindungsgemäßen Spanneinrichtung wird die Längsachse der Spannrolle um die Längsachse des Exzenters verschwenkt, wobei der Riemen entsprechend der doppelten Exzentrität E gespannt wird, um die die Spannrolle zum Spannen des Riemens verschoben wird. Der Anschlag verhindert dabei ein weiteres Verschwenken, so daß der Lagerbolzen der Riemenkraft nicht ausweichen kann. Der Anschlag kann selbstverständlich auch derart ausgelegt sein, daß dieser das Verschwenken des Lagerbolzens stoppt, bevor die Spannrolle um die doppelte Exzentrität verschoben ist.

Mit der erfindungsgemäßen Spanneinrichtung bietet sich in besonders günstiger Weise ein Verfahren zum Einstellen der Riemenspannung an. Zunächst wird die Schildplatte gegenüber dem ortsfesten Maschinenteil verschwenkt, bis der Riemen unter fühlbarer Spannung, insbesondere Daumenkraft, an der Spannrolle in deren unteren Totpunkt anliegt, wobei im unteren Totpunkt die Längsachsen des Exzenters und der Spannrolle wenigstens annähernd die Wirklinie der radialen Spannrollenkraft schneiden, die von dem Riemen auf die Spannrolle übertragen wird, und wobei die Längsachse des Exzenters zwischen der Längsachse der Spannrol le und dem Angriffspunkt der Spannrol lenkraft angeordnet ist. Nun wird die Schildplatte an dem ortsfesten Maschinenteil festgelegt. Um die vorgesehene Riemenspannung einzustellen, wird der Lagerbolzen um den Exzenter herum über den oberen Totpunkt hinaus verschwenkt, wobei im oberen Totpunkt die Spannrolle um die doppelte Exzentrität bezogen auf den unteren Totpunkt in Richtung auf den Riemen verschoben ist, wobei ein weiteres Verschwenken des Lagerbolzens durch den Anschlag verhindert ist. Zum Verschwenken des Lagerbolzens weist dieser an seinem von der Schildplatte abgewandten Ende vorzugsweise einen Innenvielkant für ein Werkzeug auf. Mit dem Hebel des Werkzeugs kann der Lagerbolzen problemlos verschwenkt werden. Da der Lagerbolzen nach Überschreiten des oberen Totpunktes infolge der wirkenden Spannrollenkraft wieder in Richtung auf seinen unteren Totpunkt gedrückt wird, ist der Anschlag vorgesehen, der ein weiteres Verschwenken des Lagerbolzens verhindert. Der besondere Vorteil liegt darin, daß der Lagerbolzen nun nicht so lange festgehalten muß, bis dieser an der Schildplatte festgelegt ist. Die Größe der Exzentrität ist abhängig von dem jeweiligen Riementrieb und wird vorab konstruktiv vorgesehen.

Der Anschlag ist zweckmäßiger Weise an dem Lagerbolzen und an der Schildplatte vorgesehen, wobei der Anschlag eine Ausnehmung und einen in die Ausnehmung eingreifenden Vorsprung aufweist. Der Vorsprung kann beispielsweise durch einen an der Schildplatte befestigten Stift und die Ausnehmung durch eine stirnseitig an dem Lagerbolzen vorgesehene Rille gebildet sein, die koaxial zur Längsachse des Exzenters angeordnet ist.

Die Schildplatte ist vorzugsweise an zwei voneinander beabstandeten Stellen mittels Befestigungschrauben lösbar an dem ortsfesten Maschinenteil befestigt, wobei an der einen Stelle die Schraube durch ein Langloch der Schildplatte hindurchgeführt ist, so daß die Schildplatte um die andere Stelle verschwenkbar ist.

Der Exzenter ist in besonders günstiger Weise durch eine Schraube gebildet, die durch eine parallel zur Längsachse des Lagerbolzens verschobene, in dem Lagerbolzen vorgesehene Bohrung hindurchgeführt und mit der Schildplatte verschraubt ist. Auf diese Weise übernimmt die Schraube zwei Funktionen, nämlich zum einen die bereits beschriebene Funktion als Exzenter und weiterhin die Funktion, den Lagerbolzen an der Schildplatte festzulegen. Dies geschieht vorzugsweise dadurch, daß der Lagerbolzen zwischen dem Schraubenkopf und der Schildplatte eingespannt wird.

### Kurze Beschreibung der Zeichnungen

Nachstehend wird die Erfindung anhand von einem in insgesamt drei Figuren dargestellten Ausführungsbeispiel näher erläutert. Es zeigen:
- Figur 1: einen Längsschnitt durch eine erfindungsgemäße Spanneinrichtung,
- Figur 2: eine Ansicht der erfindungsgemäßen Spanneinrichtung aus Figur 1 und
- Figur 3: eine Prinzipskizze zur Veranschaulichung der Wirkungsweise der Spanneinrichtung aus den Figuren 1 und 2.

### Ausführliche Beschreibung der Zeichnungen

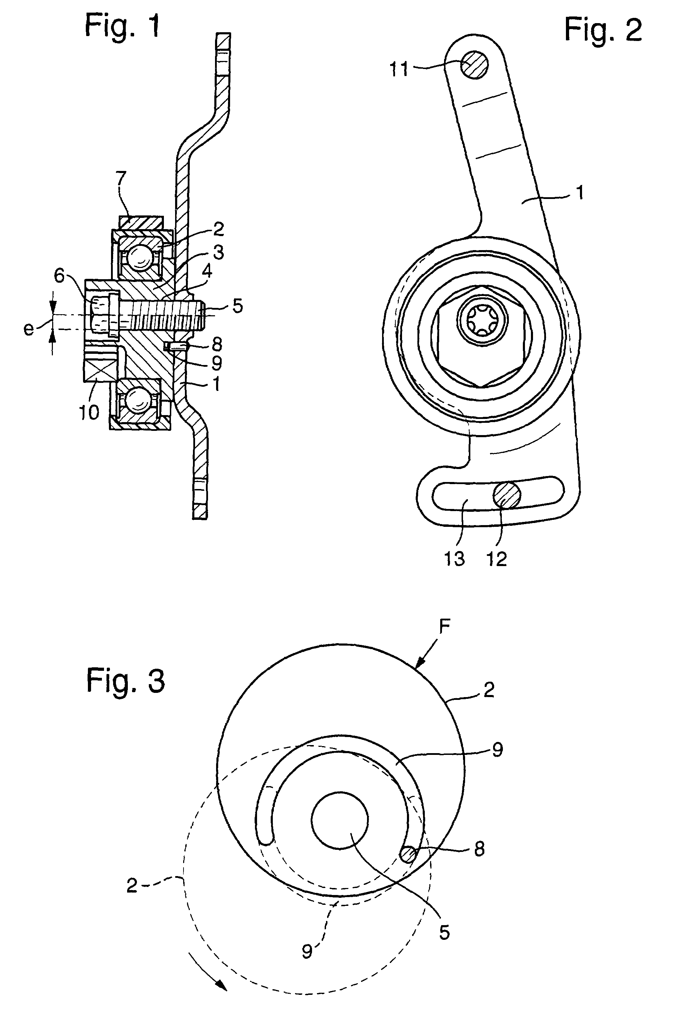

Die in Figur 1 abgebildete Spanneinrichtung weist eine Schildplatte 1 auf, die an einem nicht dargestellten ortsfesten Maschinenteil festlegbar ist. Eine Spannrolle 2 ist auf einem Lagerbolzen 3 drehbar angeordnet. Der Lagerbolzen 3 weist eine zu seiner Längsachse parallele Bohrung 4 auf, die mit einer Exzentrität E von der Längsachse des Lagerbolzens 3 beabstandet ist. Durch die Bohrung 4 ist eine Schraube 5 hindurchgeführt und mit der Schildplatte 1 verschraubt, wobei der Lagerbolzen zwischen dem Schraubenkopf 6 und der Schildplatte 1 fest ein spannbar ist. Die Spannrolle 2 ist gegen einen Riemen 7 angedrückt. Ein Stift 8 ist in der Schildplatte 1 verankert und greift in eine Rille 9 ein, die stirnseitig an dem Lagerbolzen 3 koaxial zur Längsachse der Schraube 5 angeordnet ist. Der Lagerbolzen 3 ist weiterhin mit einer Schlüsselfläche 10 versehen.

Figur 2 zeigt die Spanneinrichtung aus Figur 1 in der Ansicht. An gegenüberliegenden Enden ist die Schildplatte 1 mittels zweier Befestigungsschrauben 11, 12 an dem nicht dargestellten ortsfesten Maschinenteil befestigt. Die Befestigungsschraube 12 ist dabei durch ein in der Schildplatte 1 vorgesehenes Langloch 13 hindurchgeführt, so daß die Schildplatte 1 um die Befestigungsschraube 11 herum schwenkbar ist. In einer Voreinstellung wird die Schildplatte 1 um die Befestigungsschraube 11 so weit geschwenkt, bis der Riemen leicht gespannt ist. An diese Voreinstellung schließt sich die weitere Einstellung an, mittels der die vorgesehene Riemenspannung eingestellt wird.

Anhand der Figur 3 soll die weitere Einstellung mit der erfindungsgemäßen Spanneinrichtung näher erläutert werden. Für diese Zwecke ist lediglich die Spannrolle 2, der Exzenter 5, die Rille 9 und der Stift 8 dargestellt. Die gestrichelte Darstellung zeigt die Spannrolle 2, die unter fühlbarer Spannung, insbesondere Daumenkraft gegen den Riemen angedrückt ist. In dieser Position befindet sich die Spannrolle 2 in ihrem unteren Totpunkt; d. h., daß der Exzenter 5 so nah wie möglich dem Riemen benachbart ist. In anderen Worten: im unteren Totpunkt schneiden die Längsachsen des Exzenters und der Spannrolle wenigstens annähernd die Wirklinie der radialen Spannrollenkraft, die von dem Riemen auf die Spannrolle übertragen wird, wobei die Längsachse des Exzenters zwischen der Längsachse der Spannrolle und dem Angriffspunkt der Spannrollenkraft F angeordnet ist. In dieser Situation wird die oben beschriebene Voreinstellung durchgeführt. Nun wird mittels eines Schraubenschlüssels, der an der Schlüsselfläche 10 angreift, der Lagerbolzen um den Exzenter 5 herum entgegen dem Uhrzeigersinn bis über den oberen Totpunkt des Lagerbolzens 3 gedreht. Ein weiteres Drehen des Lagerbolzens 3 ist nicht möglich, da der Stift 8 an dem einen umfangsseitigen Ende der Rille 9 anschlägt. Die angreifende Spannrollenkraft drückt wegen der genannten Totpunkt-Überschreitung dieses umfangsseitige Ende der Rille 9 gegen den Stift 8, so daß der Lagerbolzen 3 nicht so lange festgehalten werden muß, bis dieser durch Festziehen der Schraube 5 an der Schildplatte festgelegt ist. Nun ist die vorgesehene Riemenspannung eingestellt.

### Bezugszahlenliste

- 1: Schildplatte
- 2: Spannrolle
- 3: Lagerbolzen
- 4: Bohrung
- 5: Schraube
- 6: Schraubenkopf
- 7: Riemen
- 8: Stift
- 9: Rille
- 10: Schlüsselfläche
- 11: Befestigungsschraube
- 12: Befestigungsschraube
- 13: Langloch

## Patentansprüche

1. Spanneinrichtung für Zugmittel, insbesondere Riemen (7),
- mit einer gegenüber einem ortsfesten Maschinenteil verschwenkbaren Schildplatte (1),
- und mit einer auf einem Lagerbolzen (3) drehbar gelagerten Spannrolle (2) zur Anlage an das Zugmittel,
- wobei der Lagerbolzen (3) mit einem, an der Schildplatte (1) aufgenommenen Exzenter (5) versehen ist,
- wobei die Längsachsen des Exzenters (5) und des Lagerbolzens (3) um eine Exzentrizität (e) voneinander beabstandet sind,
- wobei der Lagerbolzen (3) von einem unteren Totpunkt bis über den oberen Totpunkt hinaus verschwenkbar ist,
- wobei im unteren Totpunkt die Längsachsen des Exzenters (5) und der Spannrolle (2) wenigstens annähernd die Wirklinie der radialen Spannrollenkraft schneiden, die von dem Riemen auf die Spannrolle übertragen wird, und wobei die Längsachse des Exzenters (5) zwischen der Längsachse der Spannrolle (2) und dem Angriffspunkt der Spannrollenkraft (F) angeordnet ist, und
- wobei die Verschwenkung des Lagerbolzens (3) um den Exzenter (5) durch einen Anschlag (8, 9) begrenzt ist.

2. Verfahren zum Einstellen der Riemenspannung mit einer Spanneinrichtung gemäß Anspruch 1:
- Verschwenken der Schildplatte (1) gegenüber dem ortsfesten Maschinenteil, bis der Riemen (7) unter fühlbarer Spannung, insbesondere Daumenkraft, an der Spannrolle (2) in deren unteren Totpunkt anliegt, wobei im unteren Totpunkt die Längsachsen des Exzenters (5) und der Spannrolle (2) wenigstens annähernd die Wirklinie der radialen Spannrollenkraft schneiden, die von dem Riemen auf die Spannrolle übertragen wird, und wobei die Längsachse des Exzenters (5) zwischen der Längsachse der Spannrolle (2) und dem Angriffspunkt der Spannrollenkraft (F) angeordnet ist;
- Festlegen der Schildplatte (1) an dem ortsfesten Maschinenteil
- Verschwenken des Lagerbolzens (3) über den oberen Totpunkt hinaus, wobei im oberen Totpunkt die Spannrolle (2) um die doppelte Exzentrität (e) bezogen auf den unteren Totpunkt in Richtung auf den Riemen (7) verschoben ist, wobei ein weiteres Verschwenken des Lagerbolzens (3) durch den Anschlag (8, 9) verhindert ist,
- Festlegen des Lagerbolzens (3) an der Schildplatte (1).

3. Spanneinrichtung nach Anspruch 1, **dadurch gekennzeichnet, daß** der Anschlag (8, 9) an dem Lagerbolzen (3) und an der Schildplatte (1) vorgesehen ist, wobei der Anschlag eine Ausnehmung (9) und einen in die Ausnehmung (9) angreifenden Vorsprung (8) aufweist.

4. Spanneinrichtung nach Anspruch 3, **dadurch gekennzeichnet, daß** der Vorsprung (8) durch einen an der Schildplatte (1) befestigten Stift (7) und die Ausnehmung durch eine stirnseitig an dem Lagerbolzen (3) vorgesehene Rille (8) gebildet ist, die koaxial zur Längsachse des Exzenters (5) angeordnet ist.

5. Spanneinrichtung nach Anspruch 1, **dadurch gekennzeichnet, daß** die Schildplatte (1) an zwei voneinander beabstandeten Stellen mittels Schrauben (11, 12) lösbar an dem ortsfesten Maschinenteil befestigt ist, wobei an der einen Stelle die Schraube (12) durch ein Langloch (13) der Schildplatte (1) hindurchgeführt ist, so daß die Schildplatte (1) um die andere Stelle verschwenkbar ist.

6. Spanneinrichtung nach Anspruch 1, **dadurch gekennzeichnet, daß** der Exzenter durch eine Schraube (5) gebildet ist, die durch eine parallel zur Längsachse des Lagerbolzens (3) verschobene, in dem Lagerbolzen (3) vorgesehene Bohrung (4) hindurchgeführt und mit der Schildplatte (1) verschraubt ist.

## Claims

1. Tensioner for traction means, in particular belt (7), having a shield plate (1) which is pivotable relative to a fixed machine part, and having a tension roller (2) which is mounted rotatably on a bearing bolt (3) and is to be applied to the traction means, wherein the bearing bolt (3) is provided with a cam (5) received on the shield plate (1), wherein the longitudinal axes of the cam (5) and of the bearing bolt (3) are spaced apart by a degree of eccentricity (e), wherein the bearing bolt (3) is pivotable from a bottom dead centre beyond the upper dead centre, wherein in the bottom dead centre the longitudinal axes of the cam (5) and of the tension roller (2) at least approximately intersect with the line of action of the radial the tension roller force, which is transmitted from the belt to the tension roller, and wherein the longitudinal axis of the cam (5) is disposed between the longitudinal axis of the tension roller (2) and the point of application of the tension roller force (F), and wherein the pivoting of the bearing bolt (3) about the cam (5) is limited by a stop (8, 9).

2. Method of setting the tension of a belt with a tensioner according to claim 1, involving
■ pivoting of the shield plate (1) relative to the fixed machine part, until the belt (7) is applied to the tension roller (2) in its upper dead centre under tangible tension, in particular thumb pressure, wherein in the bottom dead centre the longitudinal axes of the cam (5) and of the tension roller (2) at least approximately intersect with the line of action of the radial tension roller force, which is transmitted from the belt to the tension roller, and wherein the longitudinal axis of the cam (5) is disposed between the longitudinal axis of the tension roller (2) and the point of application of the tension roller force (F);
■ fixing of the shield plate (1) to the fixed machine part;
■ pivoting of the bearing bolt (3) beyond the upper dead centre, in which case in the upper dead centre the tension roller (2) is displaced in the direction of the belt (7) by twice the degree of eccentricity (e) relative to the bottom dead centre, further pivoting of the bearing bolt (3) being prevented by the stop (8, 9);
■ fixing of the bearing bolt (3) to the shield plate (1).

3. Tensioner according to claim 1, **characterised in that** the stop (8, 9) is provided on the bearing bolt (3) and on the shield plate (1), the stop having a recess (9) and a projection (8) cooperating with the recess (9).

4. Tensioner according to claim 3, **characterised in that** the projection (8) is formed by a pin (7) fixed to the shield plate (1), and the recess by a groove (8) which is provided on the end of the bearing bolt (3) and which is disposed coaxially to the longitudinal axis of the cam (5).

5. Tensioner according to claim 1, **characterised in that** the shield plate (1) is fixed detachably to the fixed machine part at two spaced locations by means of screws (11, 12), wherein at the one location the screw (12) is passed through a slot (13) in the shield plate (1), so that the shield plate (1) is pivotable about the other location.

6. Tensioner according to claim 1, **characterised in that** the cam is formed by a screw (5), which is passed through a bore provided in the bearing bolt (3) displaced parallel to the longitudinal axis of the bearing bolt (3) and is screwed to the shield plate (1).

## Revendications

1. Dispositif tendeur pour moyens de traction notamment des courroies (7),
- comprenant une plaque latérale (1) pouvant pivoter par rapport à une partie de machine fixe,
- et comprenant également un galet tendeur (2) destiné à s'appliquer sur le moyen de traction et monté en rotation sur un tourillon de palier (3),
- le tourillon de palier (3) étant pourvu d'un excentrique (5) reçu dans la plaque latérale (1),
- les axes longitudinaux de l'excentrique (5) ci du tourillon de palier (3) étant distants l'un de l'autre d'une excentricité (e),
- le tourillon de palier (3) pouvant pivoter d'un point mort bas jusqu'au-delà du point mort haut,
- les axes longitudinaux de l'excentrique (5) et du galet de tendeur (2) coupant, au point mort bas, au moins approximativement, la ligne d'action de la force radiale du galet tendeur, qui est transmise de la courroie au galet tendeur, et l'axe longitudinal de l'excentrique (5) étant disposé entre l'axe longitudinal du galet tendeur (2) et le point d'application de la force (F) du galet tendeur, et
- le pivotement du tourillon de palier (3) autour de l'excentrique (5) étant limité par une butée (8, 9).

2. Procédé de réglage de la tension de courroie au moyen d'un dispositif tendeur selon la revendication 1, d'après lequel:
- on fait pivoter la plaque latérale (1) par rapport à la partie de machine fixe, jusqu'à ce que la courroie (7) s'appuie sous une tension sensible, notamment la force du pouce, sur le galet tendeur (2) dans son point mort bas, les axes longitudinaux de l'excentrique (5) et du galet tendeur (2) coupant, au point mort bas, au moins approximativement, la ligne d'action de la force radiale du galet tendeur, qui est transmise de la courroie au galet tendeur, et l'axe longitudinal de l'excentrique (5) étant disposé entre l'axe longitudinal du galet tendeur (2) et le point d'application de la force (F) du galet tendeur,
- on immobilise la plaque latérale (1) sur la partie de machine fixe,
- on fait pivoter le tourillon de palier (3) au-delà du point mort haut, le galet tendeur (2) étant, au point mort haut, décale de la double excentricité (e) en direction de la courroie (7), relativement au point mort bas, et une poursuite du pivotement du tourillon de palier (3) étant limitée par la butée (8, 9),
- on immobilise le tourillon de palier (3) sur la plaque latérale (1).

3. Dispositif tendeur selon la revendication 1, **caractérisé en ce que** la butée (8, 9) est prévue sur le tourillon de palier (3) et sur la plaque latérale (1), la butée présentant un évidement (9) et une protubérance (8) s'engageant dans l'évidement (9).

4. Dispositif tendeur selon la revendication **3, caractérisé en ce que** la protubérance (8) est formée par un tenon (7) fixe sur la plaque latérale (1), et l'évidement par une rainure (8) qui est formée sur le côté frontal du tourillon de palier (3) et est disposée coaxialement à l'axe longitudinal de l'excentrique (5).

5. Dispositif tendeur selon la revendication 1, **caractérisé en ce que** la plaque latérale (1) est fixée de manière démontable sur la partie de machine fixe, en deux endroits distants l'un de l'autre, au moyen de vis (11, 12), la vis (12) traversant, à l'un desdits endroits, un trou oblong (13) de la plaque latérale (1), de sorte que la plaque latérale (1) est susceptible de pivoter autour de l'autre desdits endroits.

6. Dispositif tendeur selon la revendication 1, **caractérisé en ce que** l'excentrique est formé par une vis (5) qui traverse un alésage (4) prévu dans le tourillon de palier (3) et déporté parallèlement à l'axe longitudinal du tourillon de palier (3), et qui est vissée dans la plaque latérale (1).
